# EUROPEAN PATENT APPLICATION

(11) **EP 4 491 655 A1**
(43) Date of publication of application: **15.01.2025**
(21) Application number: 23766783.7
(22) Date of filing: 06.03.2023
(51) Int. Cl.: C08G 65/333

(54) **METHOD FOR PRODUCING ACTIVE CARBONIC ACID ESTER OF POLYETHYLENE GLYCOL, AND ACTIVE CARBONIC ACID ESTER OF POLYETHYLENE GLYCOL**

(30) Priority: 09.03.2022 JP 2022035981
(71) Applicant: NOF Corporation, Shibuya-ku Tokyo 150-6019 (JP)
(72) Inventor: HAYASHI, Takaaki, Kawasaki-shi, Kanagawa 210-0865 (JP); KINOSHITA, Shuhei, Kawasaki-shi, Kanagawa 210-0865 (JP); KUBO, Kazuhiro, Kawasaki-shi, Kanagawa 210-0865 (JP)
(74) Representative: Hoffmann Eitle
(86) International application number: PCT/JP2023/008302
(87) International publication number: WO 2023/171607

(57) **Abstract**

Activated polyethylene glycol with high purity can be obtained by a method including:
a step (a) of reacting polyethylene glycol having a hydroxyl group with one or more active carbonic acid reagents selected from the group consisting of disuccinimidyl carbonate and p-nitrophenylchloroformate in presence of a base in an aprotic solvent which is immiscible with water, to obtain a composition containing an active carbonic acid ester of polyethylene glycol and the active carbonic acid reagent being unreacted,
a step (b) of partially removing the active carbonic acid reagent by filtering the composition obtained in the step (a), and then obtaining a composition by adding an alcohol containing an acidic functional group to react with the unreacted active carbonic acid reagent, and
a step (c) of removing a reaction product of the alcohol containing an acidic functional group and the active carbonic acid reagent, the alcohol containing an acidic functional group, and a decomposition product of the active carbonic acid reagent by washing the composition obtained in the step (b) with water.

## Description

### TECHNICAL FIELD

The present invention relates to a water-soluble compound, more specifically a functional bio-polymer, a drug or a drug carrier in a drug delivery system, a method for producing an active carbonic acid ester of polyethylene glycol used for modification of a diagnostic material or device, or the like, and an active carbonic acid ester of polyethylene glycol.

### BACKGROUND ART

In recent years, in the field of pharmaceutical products, a composite in which a protein as an activator and a water-soluble composition are bonded to each other has an improvement in effects of an increase in half-life, avoidance of an immune system, and the like, as compared with a case in which a simple protein is injected into a body.

One of the water-soluble compositions used for bonding to a protein is polyethylene glycol. In general, formation of an activator-polyethylene glycol composite is performed by a reaction between an activator and polyethylene glycol. In order to perform the reaction, activated polyethylene glycol in which a terminal of polyethylene glycol is substituted with a reactive functional group is used, but in a case where an activating reagent used for activating the polyethylene glycol remains as an impurity, the activating reagent may be carried over even after a drug is produced, and may cause serious side effects, and therefore, it is required to reduce impurities in the activated polyethylene glycol to the maximum extent possible.

Various functional groups are used as the reactive functional group used in the activated polyethylene glycol. Carboxylic acid is an example of the functional group that is bonded to an amino group of a protein, but since a reaction between the carboxylic acid and the amino group requires use of a condensing agent, there is a high possibility that impurities will be produced as by-products. On the other hand, polyethylene glycol having a carbonate-containing functional group such as a succinimidyl group or a nitrophenyl group does not need to use a condensing agent when reacting with a protein or amino acid, and therefore, impurities as by-products can be reduced as compared with the case of using carboxylic acid.

As an approach for producing a carbonate-type activated polyethylene glycol, Patent Literature 1 describes synthesis of a methoxy group polyethylene glycol (mPEG-SC) having a succinimidyl carbonate group (SC group). According to the description in Patent Literature 1, a production process includes a total of two steps, a step of reacting a methoxy group polyethylene glycol (mPEG-OH) with disuccinimidyl carbonate (DSC) to synthesize mPEG-SC, and a step of adding a reactive composition and consuming all the unreacted DSC.

### PRIOR ART DOCUMENTS

### PATENT LITERATURE

Patent Literature 1: JP5544085B2
Patent Literature 2: US5281698A

### SUMMARY OF INVENTION

### PROBLEM TO BE SOLVED BY THE INVENTION

By adding the reactive composition described in Patent Literature 1, unreacted DSC can be consumed. However, remaining impurities after consumption as well as a decrease in purity of mPEG-SC due to addition of the reactive composition are unavoidable.

For example, when water, which is one of the reactive compositions described in Patent Literature 1, is used, DSC can be completely consumed, but N-hydroxysuccinimide after consumption remains contained in mPEG-SC, and no method for removing N-hydroxysuccinimide is described. N-hydroxysuccinimide has a hydroxyl group, and thus inhibits the reaction or forms a new impurity during the formation of the activator-polyethylene glycol composite. Therefore, there will be a decrease in purity of drugs, which threatens safety of drugs. Adding water to a system in which a base is present produces a basic aqueous solution, but since an active carbonic acid ester will be hydrolyzed by the basic aqueous solution, the active carbonic acid ester is also decomposed along with DSC, which may result in a decrease in purity of polyethylene glycol and drugs.

As the other approach for producing activated polyethylene glycol, Patent Literature 2 describes a method in which mPEG-OH is reacted with DSC to synthesize mPEG-SC, and then insoluble DSC is removed by filtration, and a method in which mPEG-SC is then precipitated with ether and washed to remove unreacted DSC. However, in general, step times for precipitation and filtration tend to become longer as scales thereof increase. Therefore, in large-volume production, deterioration of quality and increased variable costs may be caused due to extended step times. Precipitation of polymers requires a large amount of solvents, making the removal methods inefficient.

The present invention has been made in view of the above problems, and an object thereof is to provide a method and an apparatus for producing an active carbonic acid ester of polyethylene glycol, which can easily remove a specific remaining active carbonic acid reagent and decomposition products of the active carbonic acid reagent that remain or are generated by a reaction of the active carbonic acid reagent with polyethylene glycol, and can obtain activated polyethylene glycol with high purity.

### MEANS FOR SOLVING THE PROBLEM

As a result of extensive research, the present inventors have found that it is difficult to remove impurities contained in an active carbonic acid ester of polyethylene glycol, and have therefore investigated a method for removing all impurities by simply washing with water. That is, the present invention provides a production method in which an active carbonic acid reagent that cannot be removed by washing with water is reacted with an alcohol containing an acidic functional group to decompose the active carbonic acid reagent into impurities that can be removed by washing with water, and then all impurities can be reduced to 1 mol% or less by washing with water, and provides an active carbonic acid ester of polyethylene glycol containing impurities of 1 mol% or less.

The present invention provides a method for producing an active carbonic acid ester of polyethylene glycol, the method including:
a step (a) of reacting polyethylene glycol having a hydroxyl group with one or more active carbonic acid reagents selected from the group consisting of disuccinimidyl carbonate and p-nitrophenylchloroformate in presence of a base in an aprotic solvent which is immiscible with water, to obtain a composition containing an active carbonic acid ester of polyethylene glycol and the active carbonic acid reagent being unreacted,
a step (b) of partially removing the active carbonic acid reagent by filtering the composition obtained in the step (a), and then obtaining a composition by adding an alcohol containing an acidic functional group to react with the unreacted active carbonic acid reagent, and
a step (c) of removing a reaction product of the alcohol containing an acidic functional group and the active carbonic acid reagent, the alcohol containing an acidic functional group, and a decomposition product of the active carbonic acid reagent by washing the composition obtained in the step (b) with water.

In a preferred embodiment of the method for producing an active carbonic acid ester of polyethylene glycol according to the present invention, the active carbonic acid ester is expressed by the following Formula (1).

PEG-O-(C=O)-O-R ··· Formula (1)

(In Formula (1),
PEG is a polyethylene glycol moiety having a linear or branched structure, and
R is a succinimidyl group or a p-nitrophenyl group.)

In a preferred embodiment of the method for producing an active carbonic acid ester of polyethylene glycol according to the present invention, the polyethylene glycol is polydisperse polyethylene glycol or monodisperse polyethylene glycol.

In a preferred embodiment of the method for producing an active carbonic acid ester of polyethylene glycol according to the present invention, the polyethylene glycol has a molecular weight of 100 Dalton to 100,000 Dalton.

In a preferred embodiment of the method for producing an active carbonic acid ester of polyethylene glycol according to the present invention, the polyethylene glycol has a plurality of hydroxyl groups.

In a preferred embodiment of the method for producing an active carbonic acid ester of polyethylene glycol according to the present invention, the polyethylene glycol has one or more functional groups selected from the group consisting of a maleimide group, an azido group, a biotin group, a methoxy group, an aldehyde group protected with an acetal, an amino group protected with a 9-fluorenylmethyloxycarbonyl group, an amino group protected with a t-butoxycarbonyl group, and an amino group protected with a benzyloxycarbonyl group.

In a preferred embodiment of the method for producing an active carbonic acid ester of polyethylene glycol according to the present invention, a solvent constituting the aprotic solvent which is immiscible with water is one or more solvents selected from the group consisting of toluene, chloroform, and dichloromethane.

In a preferred embodiment of the method for producing an active carbonic acid ester of polyethylene glycol according to the present invention, the alcohol containing an acidic functional group is selected from the group consisting of glycolic acid, lactic acid, 3-hydroxybutyric acid, hydroxypivalic acid, β-hydroxyisovaleric acid, 3-hydroxy-3-methylvaleric acid, tartaric acid, malic acid, citric acid and hydroxybenzoic acid.

In a preferred embodiment of the method for producing an active carbonic acid ester of polyethylene glycol according to the present invention, the washing with water is performed with water or aqueous solution, the water or aqueous solution having a pH of 0 or more and 7 or less.

The present invention provides an active carbonic acid ester of polyethylene glycol which is made from a reaction product of polyethylene glycol having a hydroxyl group with one or more active carbonic acid reagents selected from the group consisting of disuccinimidyl carbonate and p-nitrophenylchloroformate, in which
contents of the active carbonic acid reagent, a decomposition product of the active carbonic acid reagent, an alcohol containing an acidic functional group, and a reaction product of the alcohol containing an acidic functional group and the active carbonic acid reagent are each 1 mol% or less with respect to 100 mol% of the active carbonic acid ester.

In a preferred embodiment of the active carbonic acid ester of polyethylene glycol according to the present invention, the active carbonic acid ester is expressed by the following Formula (2).

PEG-O-(C=O)-O-R ··· Formula (2)

(In Formula (2),
PEG is a polyethylene glycol moiety having a linear or branched structure, and
R is a succinimidyl group or a p-nitrophenyl group.)

### EFFECTS OF INVENTION

The present invention makes it possible to easily "remove impurities such as a base and a decomposition product of an active carbonic acid reagent", which is difficult to achieve in the conventional art, by selecting effective solvents and reagents and simply washing with water. The active carbonic acid reagent that is difficult to remove by washing with water can be converted into impurities that can be easily removed by washing with water by making the active carbonic acid reagent react with an alcohol containing an acidic functional group, and thus can be washed with water simultaneously with other impurities. Even when the polyethylene glycol contains reactive functional groups such as maleimide groups or azido groups, decomposition of the functional groups and reaction with the functional groups are unlikely to occur, making it possible to prevent deterioration in quality. The present production method can be easily performed industrially, has excellent productivity, and can be performed in high yields without generating waste materials such as adsorbents and ion exchange resins.

### EMBODIMENTS FOR CARRYING OUT THE INVENTION

### [Active Carbonic Acid Ester of Polyethylene Glycol]

In the following section, an active carbonic acid ester of polyethylene glycol (hereinafter may be referred to as "PEG") produced in the present invention will be described.

In the active carbonic acid ester of PEG of the present invention, contents of an active carbonic acid reagent, a decomposition product of the active carbonic acid reagent, an alcohol containing an acidic functional group, and a reaction product of the alcohol containing an acidic functional group and the active carbonic acid reagent are each 1 mol% or less with respect to 100 mol% of the active carbonic acid ester of PEG. The active carbonic acid ester of PEG has the following Formula (2).

PEG-O-(C=O)-O-R ··· Formula (2)

In Formula (2), "PEG-" is a polyethylene glycol moiety having a linear or branched structure, and R is a succinimidyl group or a p-nitrophenyl group. Specific examples thereof include active carbonic acid esters of PEG as shown in Formulas (3) to (8). Among these examples, Formulas (3) and (4) are active carbonic acid esters of PEG having a linear structure, and Formulas (5) to (8) are active carbonic acid esters of PEG having a branched structure.

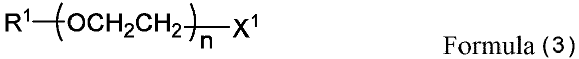

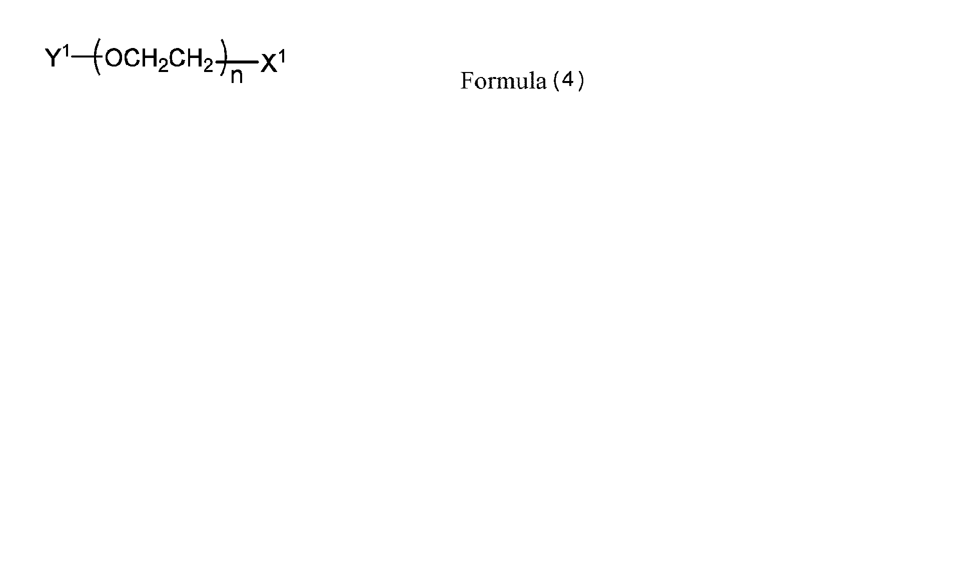

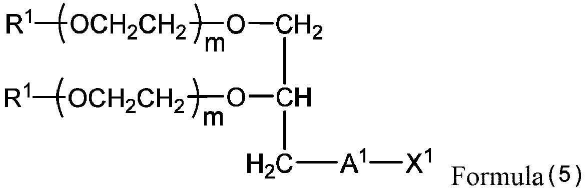

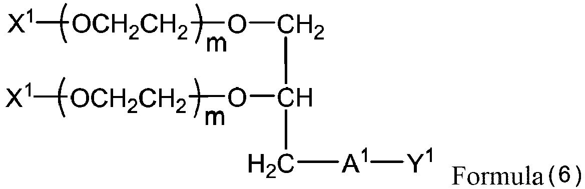

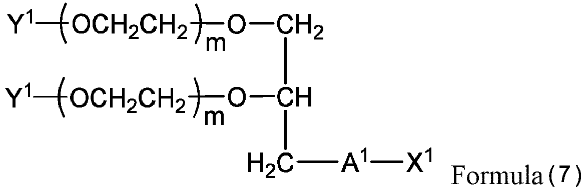

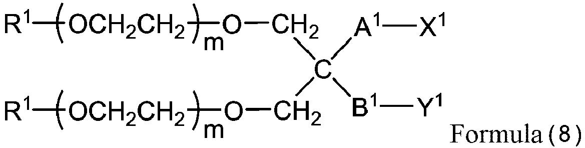

Here, X¹ is a succinimidyl group or a p-nitrophenyl group, and Y¹ is an atomic group that contains at least a functional group that reacts with a functional group present in each functional bio-molecule to form a covalent bond, and X¹ and the functional group contained in the atomic group Y¹ are different from each other,
R¹ is a hydrocarbon group having 1 to 7 carbon atoms or a hydrogen atom,
n is an integer between 3 and 2300,
m is an integer between 1 and 1200,
A¹ represents -L¹-(CH₂)m1-, -L¹-(CH₂)ml-L²-(CH₂)m2- or a single bond, and L¹ represents an ether bond, an amide bond, a urethane bond, a secondary amino group or a single bond, and L² represents an ether bond, an amide bond or a urethane bond, and m1 and m2 each independently represent an integer between 1 and 5, and
B¹ represents -L³-(CH₂)m3-, -L³-(CH₂)m3-L⁴-(CH₂)m4- or a single bond, and L³ represents an amide bond or a single bond, and L⁴ represents an ether bond, an amide bond or a urethane bond, and m3 and m4 each independently represent an integer between 1 and 5.

Impurities contained in the active carbonic acid ester of PEG include a base used in reaction, an active carbonic acid reagent, an alcohol containing an acidic functional group, a reaction product of the active carbonic acid reagent and the alcohol containing an acidic functional group, and a decomposition product of the active carbonic acid reagent. A content of each impurity with respect to 100 mol% of the active carbonic acid ester of the present invention is preferably 1 mol% or less, more preferably 0.1 mol% or less, and still more preferably 0.01 mol% or less.

A PEG moiety as a raw material may be monodisperse or polydisperse PEG (monodisperse polyethylene glycol or polydisperse polyethylene glycol).

As described in JP6638970B2, monodisperse PEG is PEG characterized by a PEG purity of 90% or more and a content of each impurity of 2% or less, and is PEG having a single molecular weight with no molecular weight distribution. Polydisperse PEG is a polymer of ethylene glycol and is PEG with a molecular weight distribution with respect to monodisperse PEG. The polydisperse PEG of the present invention is a polymer whose molecular weight distribution is preferably 1.2 or less, more preferably 1.1 or less, and most preferably 1.03 or less. In the present invention, polydisperse PEG refers to a compound synthesized by a polymerization reaction of ethylene glycol or ethylene oxide.

A molecular weight of PEG is preferably 100 Dalton to 100,000 Dalton, more preferably 100 Dalton to 40,000 Dalton, still more preferably 100 Dalton to 5,000 Dalton, and even more preferably 100 Dalton to 2,000 Dalton. In the case of PEG with a small molecular weight, the PEG itself is a viscous liquid and may dissolve more of the active carbonic acid reagent. Therefore, the present invention is more effective in a system using PEG with a small molecular weight, which is likely to contain the active carbonic acid reagent in a solution after filtration.

According to the present invention, it is possible to produce an active carbonic acid ester of PEG having a succinimidyl group or a p-nitrophenyl group at a terminal thereof, while the number of terminal functional groups is not limited to one, and may be two or more. However, the number of terminal functional groups is preferably two or less.

According to the present invention, it is possible to produce PEG having a succinimidyl group or a p-nitrophenyl group at a terminal thereof, but another different terminal thereof may have a functional group or hydrocarbon that reacts with a functional group present in a functional bio-molecule to form a covalent bond. The functional group that forms a covalent bond may be one or more of a maleimide group, an azido group, a biotin group, an aldehyde group protected with an acetal, an amino group protected with a 9-fluorenylmethyloxycarbonyl group, an amino group protected with a t-butoxycarbonyl group, and an amino group protected with a benzyloxycarbonyl group.

An active carbonic acid ester of polyethylene glycol, which has a reactive functional group other than the active carbonic acid ester, is useful as a linker for binding a low molecular weight compound to a bio-molecule to create a highly effective drug. As an exemplary structure, when one terminal of a linear PEG moiety is a maleimide group and the other terminal is an active carbonic acid ester group, the maleimide side is bonded to a thiol group of an antibody and the active carbonic acid ester is bonded to a low molecular weight compound, thereby enabling the antibody and the low molecular weight compound to be bonded via the PEG moiety.

### [Method for Producing Active Carbonic Acid Ester of PEG]

The following section, a method for producing an active carbonic acid ester of PEG is shown.

The method for producing an active carbonic acid ester of PEG according to the present invention includes:
a step (a) of reacting polyethylene glycol having a hydroxyl group with one or more active carbonic acid reagents selected from the group consisting of disuccinimidyl carbonate and p-nitrophenylchloroformate in presence of a base in an aprotic solvent which is immiscible with water, to obtain a composition containing an active carbonic acid ester of polyethylene glycol and the active carbonic acid reagent being unreacted,
a step (b) of partially removing the active carbonic acid reagent by filtering the composition obtained in the step (a), and then obtaining a composition by adding an alcohol containing an acidic functional group to react with the unreacted active carbonic acid reagent, and
a step (c) of removing a reaction product of the alcohol containing an acidic functional group and the active carbonic acid reagent, the alcohol containing an acidic functional group, and a decomposition product of the active carbonic acid reagent by washing the composition obtained in the step (b) with water.

Note that in the step (b), when an alcohol containing an acidic functional group is added to react with the unreacted active carbonic acid reagent, it is preferable to reduce a content of the active carbonic acid reagent to 1 mol% or less with respect to 100 mol% of the active carbonic acid ester.

The PEG used as a raw material in the method according to the present invention is preferably PEG having a linear or branched structure as shown in Formulas (9) to (14).

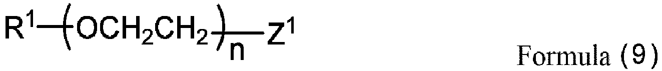

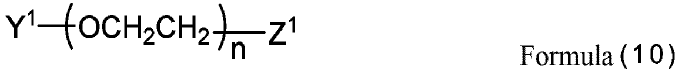

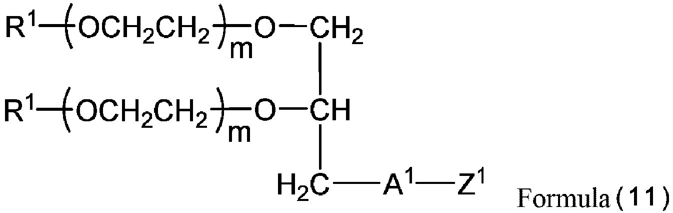

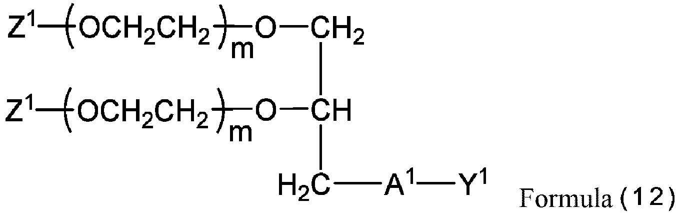

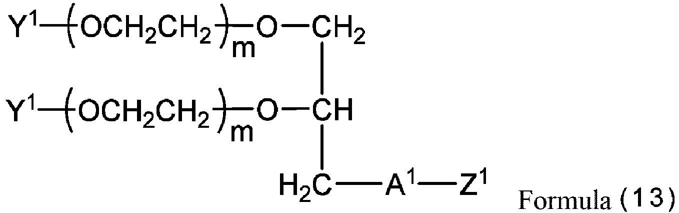

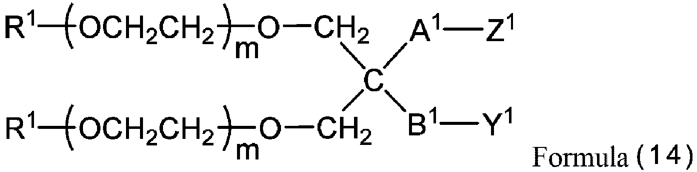

Here, in Formulas (9), (10), (11), (12), (13), and (14),
Z¹ is a hydroxyl group,
Y¹ is an atomic group that contains at least a functional group that reacts with a functional group present in each functional bio-molecule to form a covalent bond, and Z¹ and the functional group contained in the atomic group Y¹ are different from each other,
R¹ is a hydrocarbon group having 1 to 7 carbon atoms or a hydrogen atom,
n is an integer between 3 and 2300,
m is an integer between 1 and 1200,
A¹ represents -L¹-(CH₂)m1-, -L¹-(CH₂)m1-L²-(CH₂)m2- or a single bond, and L¹ represents an ether bond, an amide bond, a urethane bond, a secondary amino group or a single bond, and L² represents an ether bond, an amide bond or a urethane bond, and m1 and m2 each independently represent an integer between 1 and 5, and
B¹ represents -L³-(CH₂)m3-, -L³-(CH₂)m3-L⁴-(CH₂)m4- or a single bond, and L³ represents an amide bond or a single bond, and L⁴ represents an ether bond, an amide bond or a urethane bond, and m3 and m4 each independently represent an integer between 1 and 5.

The PEG as a raw material has one or more hydroxyl groups. When PEG having one hydroxyl group is used as a raw material, a monovalent active carbonic acid ester is obtained, and when PEG having a plurality of hydroxyl groups is used as a raw material, a divalent or higher active carbonic acid ester is obtained.

When converting the hydroxyl group of PEG having a reactive functional group into an active carbonic acid ester, a production method that does not affect the original reactive functional group is useful from the viewpoint of reducing impurities. An example of a condition that would be disadvantageous is when PEG having a maleimide group is converted into an active carbonic acid ester and reacted with an active carbonic acid conversion reagent and water, water and a base coexist, resulting in presence of a basic aqueous solution in the system. On the other hand, since it is known that the maleimide group will be hydrolyzed in a basic aqueous solution, a production method using water is unsuitable in that there is a possibility that the maleimide group will be hydrolyzed during production, resulting in a large amount of hydrolyzate as a byproduct, which is an impurity.

A solvent constituting an aprotic solvent which is immiscible with water (hereinafter referred to as an aprotic solvent) means a solvent that is not miscible with water or an aqueous solution, and when water and the solvent are mixed, the solution separates into a water layer and a solvent layer. Exemplary solvents include hydrocarbon solvents such as toluene, benzene, hexane, and heptane, and chlorine-containing hydrocarbon solvents such as chloroform and dichloromethane. From the viewpoint of solubility of PEG and a separation ability from water, toluene, chloroform and dichloromethane are particularly preferred. Necessary conditions for the solvent in the present invention are that PEG dissolves in the solvent, an active carbonic acid ester conversion reaction proceeds, the alcohol containing an acidic functional group dissolves in the solvent, and the solvent is immiscible with an aqueous solution. Methanol, acetonitrile, and acetone, which are generally used as reaction solvents, are miscible with water or an aqueous solution, and thus are unsuitable.

The base used in the reaction in the present production method refers to both inorganic bases and organic bases. However, from the viewpoint of solubility in the aprotic solvent used, organic bases are preferred. Among amine compounds that are often used as organic bases, primary amines and secondary amines may react with the active carbonic acid ester produced in the reaction to produce impurities as by-products, and therefore tertiary amines are more preferred. Exemplary bases as tertiary amines include triethylamine, N-methylmorpholine, N-phenylmorpholine, N,N-diisopropylethylamine, pyridine, and 2,6-lutidine.

The composition obtained in the step (a) is a composition of a mixture of the active carbonic acid ester of polyethylene glycol, the polyethylene glycol having a hydroxyl group, the unreacted active carbonic acid reagent, the decomposition product of the active carbonic acid reagent, the base, and the solvent.

The alcohol containing an acidic functional group means a compound having an acidic functional group and a hydroxyl group in the molecule, and is preferably a compound having 1 to 3 acidic functional groups and preferably 1 to 2 hydroxyl groups. The acidic functional group is a carboxyl group, a sulfo group, a nitric acid group, or the like, and from the viewpoint of solubility in solvents and water, the carboxyl group is preferred. The greater the number of the acidic functional groups, the higher the solubility in water, but on the other hand, the lower the solubility in the solvent, and there is a risk that the excess active carbonic acid reagent cannot be consumed. Therefore, the number of the acidic functional groups is preferably 1 to 3. If the number of hydroxyl groups is too large, a reaction product of the alcohol containing an acidic functional group and the active carbonic acid reagent becomes highly hydrophobic, and thus there is a risk that the reaction product cannot be removed by washing with water. Therefore, the number of hydroxyl groups is preferably 1 to 2. In the present invention, the consumption of the active carbonic acid reagent refers to a change from a reactive state to a non-reactive state, and the alcohol containing an acidic functional group is used as a quenching agent.

A molecular weight of the alcohol containing an acidic functional group is preferably 500 or less, and more preferably 100 or more and 200 or less, from the viewpoint of solubility in the solvent and water. Necessary conditions for the alcohol containing an acidic functional group in the present invention are that the alcohol is soluble in the solvent used and reacts with the active carbonic acid reagent, and the alcohol containing an acidic functional group itself and a composite thereof with the active carbonic acid reagent are compounds can be removed by washing with water. Possible similar structures include bicine, which has a tertiary amine along with a carboxyl group and a hydroxyl group, and HEPES (chemical name: 4-(2-hydroxyethyl)-1-piperazineethanesulfonic acid) having a sulfo group and a hydroxyl group, but bicine and HEPES are unsuitable due to poor solubility thereof in a solvent. Water used in Patent Literature 1 is not suitable since water is not miscible with the solvent used in the present invention, which slows down a consumption rate of the active carbonic acid reagent, and also since adding water in the presence of a base produces a basic aqueous solution in the system, which may deteriorate purity of the active carbonic acid ester.

Exemplary compounds of the alcohol containing an acidic functional group used as the quenching agent include glycolic acid, lactic acid, 3-hydroxybutyric acid, hydroxypivalic acid, β-hydroxyisovaleric acid, 3-hydroxy-3-methylvaleric acid, tartaric acid, malic acid, citric acid, and hydroxybenzoic acid, and among these compounds, malic acid, citric acid, and hydroxybenzoic acid are preferred, citric acid and 2-hydroxybenzoic acid (salicylic acid) are more preferred, and citric acid is most preferred. It is preferable to select an appropriate compound as the alcohol containing an acidic functional group based on the solubility thereof in the solvent and solubility in an aqueous solution of a composite of the alcohol containing an acidic functional group and the active carbonic acid reagent.

The composition obtained in the step (b) is a composition of a mixture of the active carbonic acid ester of polyethylene glycol, the unreacted active carbonic acid reagent, the decomposition product of the active carbonic acid reagent, the reaction product of the active carbonic acid reagent and the alcohol containing an acidic functional group, the alcohol containing an acidic functional group, the base, and the solvent.

Water and the aqueous solution used in the washing with water have a pH of 0 or more and 7 or less, which means a medium to acidic aqueous solution. A basic aqueous solution will decompose the active carbonic acid ester, which leads to a decrease in purity of the compound, and thus is unsuitable. The pH is preferably 5 or less, and more preferably 3 or less. Exemplary aqueous solutions having a pH of 0 or more and 7 or less include water and aqueous solutions such as a saline solution, dilute hydrochloric acid, aqueous sodium dihydrogen phosphate and combinations thereof. For the washing with water, it is preferable to select an aqueous solution that has high efficiency in removing impurities and does not cause loss of the active carbonic acid ester of PEG. The number of times the washing with water is performed depends on a degree of remaining of impurities, but may be not limited to one time but may be a plurality of times.

### EXAMPLES

### <Example 1>

A solution of maleimide-PEG (2,000 Da)-OH (Mw 2,000, 0.5 g, 250 µmol), DSC (128 mg, 500 µmol) and N-methylmorpholine (83 µL) in dichloromethane (5.0 g) was stirred for 3 hours at room temperature under nitrogen. It was confirmed by nuclear magnetic resonance analysis (hereinafter referred to as "NMR") that the resulting maleimide-PEG-succinimidyl (hereinafter referred to as "SC") has an SC conversion rate of 100% since an integral value of methylene at an α-position of SC groups was 2.00 when an integral value of methylene at an α-position of maleimide groups was set to 2 (step (a)).

The insoluble DSC was removed by filtration, and it was confirmed that the filtrate contains 0.5 µmol of the remaining DSC. Citric acid (48 mg, 250 µmol) was added to the filtrate and stirred for 1 hour, and as a result, it was confirmed by NMR that the SC conversion rate of maleimide-PEG-SC is 100%, and no DSC is detected (0.02 mol% or less) (step (b)).

Thereafter, the filtrate was washed 3 times with a 1N aqueous hydrochloric acid solution (pH 0.1) containing 15 weight% of normal salt. The solution after washing was analyzed by NMR, and it was confirmed that the SC conversion rate of maleimide-PEG-SC remains at 100%, and that N-methylmorpholine, citric acid, disuccinimidyl citrate carbonate, and N-hydroxysuccinimide released by DSC are not detected (each 1.0 mol% or less) (the above is the step (c)).

The solution after washing was washed 1 time with a saturated saline solution of pH 2.5, added with magnesium sulfate (2.5 g), followed by drying and filtration. The filtrate was condensed under a reduced pressure to obtain maleimide-PEG-SC.

### <Example 2>

A solution of OH-EG12-OH (monodisperse PEG with 12 ethylene glycol units, Mw 547, 200 mg, 366 µmol), DSC (281 mg, 1.1 mmol) and pyridine (132 µL) in dichloromethane (1.3 g) was stirred at room temperature under nitrogen for 2 hours. By NMR, it was confirmed by NMR that the obtained SC-EG12-SC has an SC conversion rate of 100%, since an integral value of methylene at the α-position of the SC groups was 4.00 when a total integral value of methylene in EG12 excluding the methylene at the α- and β-positions of the SC groups was set to 44 (step (a)).

The insoluble DSC was removed by filtration, and it was confirmed that the filtrate contains 2.2 µmol of the remaining DSC. Citric acid (2.8 mg, 15 µmol) was added to the filtrate and stirred for 30 minutes, and as a result, it was confirmed by NMR that the SC conversion rate of SC-EG12-SC is 100%, and no remaining DSC is detected (0.02 mol% or less) (the above is the step (b)).

Thereafter, the filtrate was washed 3 times with a 1N aqueous hydrochloric acid solution (pH 0.1) containing 15 weight% of normal salt. The solution after washing was analyzed by NMR, and it was confirmed that the SC conversion rate of SC-EG12-SC remains at 100%, and that pyridine, citric acid, disuccinimidyl citrate carbonate, and N-hydroxysuccinimide released by DSC are not detected (each 1.0 mol% or less) (the above is the step (c)).

The solution after washing was washed 1 time with a saturated saline solution of pH 2.5, added with magnesium sulfate (100 g), followed by drying and filtration. The filtrate was condensed under a reduced pressure to obtain SC-EG12-SC.

### <Example 3>

Toluene (5.0 g) was charged into mPEG (2,000 Da)-OH (Mw 2,000, 0.5 g, 250 µmol), followed by reflux for dehydration at 110°C. Then, after cooling to 40°C, a solution of p-nitrophenyl chloroformate (p-NP-Cl) (84 mg, 667 µmol) and triethylamine (84 µL) was stirred under nitrogen for 3 hours. By thin layer chromatography (hereinafter referred to as "TLC"), it was confirmed that an NP conversion rate of the obtained mPEG-p-nitrophenyl (NP) is 99% or more since no amount of mPEG-OH was detected (1.0 mol% or less) (step (a)).

The insoluble p-NP-Cl was removed by filtration using a filter aid, and it was confirmed that the filtrate contains 56 µmol of the remaining p-NP-Cl. Salicylic acid (35 mg, 250 µmol) was added to the filtrate and stirred for 1 hour, and as a result, it was confirmed by NMR that the NP conversion rate of mPEG-NP remains at 99% or more and that p-NP-Cl is not detected (1.0 mol% or less) (step (b)).

Thereafter, the filtrate was washed 3 times with a 1N aqueous hydrochloric acid solution (pH 0.1) containing 15 weight% of normal salt, and further washed 6 times with 10 weight% of a saline solution (pH 6). The solution after washing was analyzed by NMR, and it was confirmed by NMR that the NP conversion rate of mPEG-NP remains at 99% or more, and that triethylamine, salicylic acid, salicylic acid-NP, and p-nitrophenol resulting from decomposition of p-NP-Cl are not detected (each 1.0 mol% or less) (the above is the step (c)).

The solution after washing was washed 1 time with a saturated saline solution of pH 2.5, added with magnesium sulfate (0.5 g), followed by drying and filtration. The filtrate was condensed under a reduced pressure to obtain mPEG-NP.

### <Example 4>

A solution of a compound (1) (Mw 1299.5, 3.6 g, 2.8 mmol), DSC (2.2 g, 8.4 mmol) and N-methylmorpholine (987 µL) in dichloromethane (65.5 g) was stirred at room temperature under nitrogen for 3 hours. By NMR, it was confirmed that an obtained compound (2) has an SC conversion rate of 98% since an integral value of the methylene at the α-position of the SC groups was 3.92 when a total integral value of the methylene of PEG excluding the methylene at the α-position of the SC groups was set to 92 (step (a)).

The insoluble DSC was removed by filtration, and it was confirmed that the filtrate contains 0.3 µmol of the remaining DSC. Citric acid (48 mg, 250 µmol) was added to the filtrate and stirred for 1 hour, and as a result, it was confirmed that the SC conversion rate of the compound (2) is 98%, and no DSC is detected (0.02 mol% or less) (step (b)).

Thereafter, the filtrate was washed 3 times with a 1N aqueous hydrochloric acid solution (pH 0.1) containing 15 weight% of normal salt. The solution after washing was analyzed by NMR, and it was confirmed that the SC conversion rate of the compound (2) remains at 98%, and that N-methylmorpholine, citric acid, disuccinimidyl citrate carbonate, and N-hydroxysuccinimide released by DSC are not detected (each 1.0 mol% or less) (the above is the step (c)).

The solution after washing was washed 1 time with a saturated saline solution of pH 2.5, added with magnesium sulfate (65.5 g), followed by drying and filtration. The filtrate was condensed under a reduced pressure to obtain the compound (2).

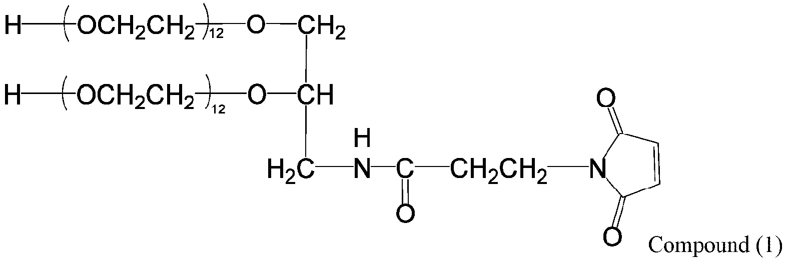

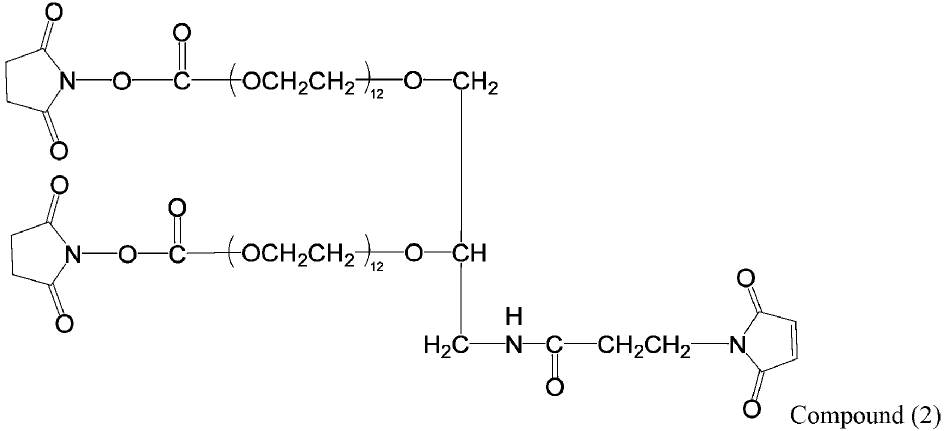

### <Example 5>

A solution of a compound (3) (Mw 1331.6, 3.0 g, 2.25 mol) in dichloromethane (30 g) was stirred under nitrogen for 2 hours with p-nitrophenyl chloroformate (p-NP-Cl) (908 mg, 4.5 mol) and N-phenylmorpholine (919 mg). It was confirmed by TLC that an obtained compound (4) has a nitrophenyl (NP) conversion rate of 99% or more since the compound (3) was not detected (1.0 mol% or less) (step (a)).

The insoluble p-NP-Cl was removed by filtration using a filter aid, and it was confirmed that the filtrate contains 82 µmol of the remaining p-NP-Cl. Citric acid (48 mg, 250 µmol) was added to the filtrate and stirred for 1 hour, and as a result, it was confirmed that the NP conversion rate of the compound (4) remains at 100%, and no p-NP-Cl is detected (1.0 mol% or less) (step (b)).

Thereafter, the filtrate was washed 3 times with a 1N aqueous hydrochloric acid solution (pH 0.1) containing 15 weight% of normal salt, and further washed 6 times with 10 weight% of a saline solution (pH 6). The solution after washing was analyzed by NMR, and it was confirmed that the NP conversion rate of the compound (4) remains at 100%, and that triethylamine, citric acid, citric acid-NP, and p-nitrophenol resulting from decomposition of p-NP-Cl are not detected (each 1.0% or lower) (the above is the step (c)).

The solution after washing was washed 1 time with a saturated saline solution of pH 2.5, added with magnesium sulfate (3 g), followed by drying and filtration. The filtrate was condensed under a reduced pressure to obtain the compound (4).

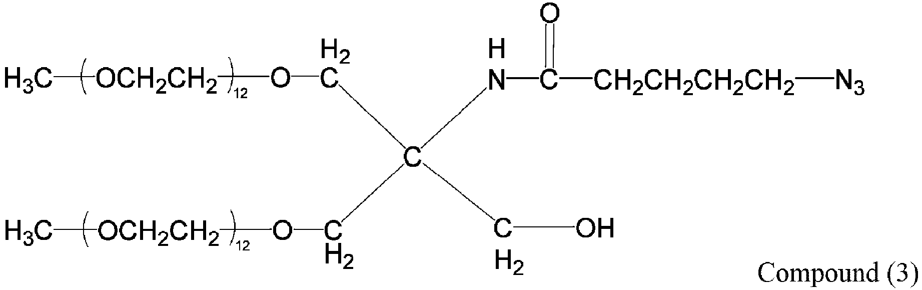

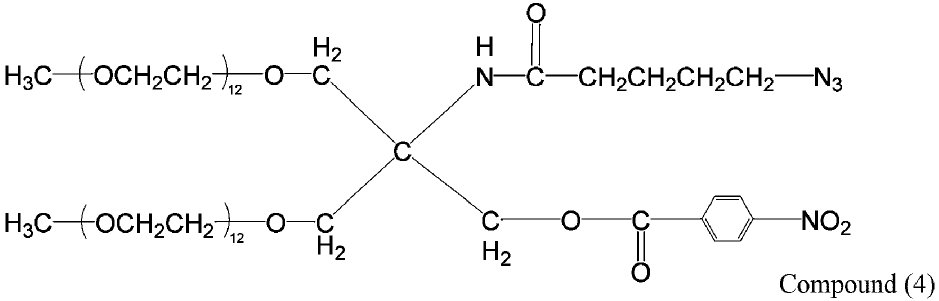

### <Comparative Example 1>

A solution of maleimide-PEG (2,000 Da)-OH (Mw 2,000, 0.5 g, 250 µmol), DSC (128 mg, 500 µmol) and N-methylmorpholine (83 µL) in dichloromethane (5.0 g) was stirred for 3 hours at room temperature under nitrogen. By NMR, it was confirmed that the obtained maleimide-PEG-SC has an SC conversion rate of 100%, since an integral value of the methylene at the α-position of the SC groups was 2.00 when an integral value of the methylene at the α-position of the maleimide group was set to 2 (step (a)).

The insoluble DSC was removed by filtration, and it was confirmed that the filtrate contains 0.4 µmol of the remaining DSC. Ion-exchanged water (4.5 µL, 250 µmol) was added, followed by stirring for 1 hour, and as a result, it was confirmed by NMR that the SC conversion rate of maleimide-PEG-SC remained at 100%, but 0.08 µmol of DSC remained.

When citric acid is used as the quenching agent as described in Example 1, no DSC remained at 1 hour. On the other hand, in Comparative Example 1, water was used as the quenching agent, and as a result, the DSC remained. This is because dichloromethane, which is not miscible with water, was used as the solvent, and thus the number of contacts between the DSC dissolved in dichloromethane and water was reduced, slowing down the decomposition rate of the DSC.

### <Comparative Example 2>

A solution of maleimide-PEG (2,000 Da)-OH (Mw 2,000, 0.5 g, 250 µmol), DSC (128 mg, 500 µmol) and N-methylmorpholine (83 µL) in acetonitrile (5.0 g) was stirred for 3 hours at room temperature under nitrogen. By NMR, it was confirmed that the obtained maleimide-PEG-SC has an SC conversion rate of 100%, since an integral value of the methylene at the α-position of the SC groups was 2.00 when an integral value of the methylene at the α-position of the maleimide group was set to 2 (step (a)).

Ion-exchanged water (7 µL, 400 µmol) was added to the reaction solution containing 20.5 µmol of the remaining DSC, followed by stirring for 4 hours, and as a result, it was confirmed by NMR that the SC conversion rate of maleimide-PEG-SC remains at 100% and the DSC is completely consumed. Then, a 1N aqueous hydrochloric acid solution (pH 0.1) containing 15 weight% of normal salt was added and mixed, and thus impurities could not be removed.

In Comparative Example 2, in which acetonitrile was used as the solvent, no DSC remained after quenching with water. However, after quenching, acetonitrile and water were miscible and did not separate into layers, making it impossible to wash with water and therefore impossible to remove the impurities.

### <Comparative Example 3>

A solution of mPEG(1,500 Da)-OH (Mw 1,500, 0.5 g, 333 µmol), DSC (171 mg, 667 µmol) and pyridine (81 µL) in dichloromethane (5.0 g) was stirred at room temperature under nitrogen for 3 hours. By NMR, it was confirmed that the obtained mPEG-SC has an SC conversion rate of 100%, since an integral value of the methylene at the α-position of the SC groups was 2.00 when an integral value of the methoxy groups was 3. The insoluble DSC was removed by filtration, and it was confirmed by NMR that the filtrate contains 0.2 µmol of the remaining DSC (step (a)).

Bicine (54 mg, 333 µmol) was added to the filtrate, followed by stirring for 1 hour, and as a result, it was confirmed by NMR that the SC conversion rate of mPEG-SC remained at 100%, but DSC remained and was unconsumed.

In Comparative Example 3, when bicine was used as the quenching agent, bicine was not dissolved in dichloromethane, and the DSC could not be completely consumed.

### <Comparative Example 4>

A solution of mPEG(1,500 Da)-OH (Mw 1,500, 0.5 g, 333 µmol), DSC (171 mg, 667 µmol) and N-pyridine (81 µL) in dichloromethane (5.0 g) was stirred at room temperature under nitrogen for 3 hours. By NMR, it was confirmed that the obtained mPEG-SC has an SC conversion rate of 100%, since an integral value of the methylene at the α-position of the SC groups was 2.00 when an integral value of the methoxy groups was 3. The insoluble DSC was removed by filtration, and it was confirmed by NMR that the filtrate contains 0.2 µmol of the remaining DSC. HEPES (chemical name: 4-(2-hydroxyethyl)-1-piperazineethanesulfonic acid) (79.4 mg, 333 µmol) was added to the filtrate and stirred for 1 hour, and as a result, it was confirmed by NMR that the SC conversion rate of mPEG-SC remained at 100%, but DSC remained and was unconsumed.

When HEPES was used as the quenching agent in Comparative Example 4, HEPES did not dissolve in dichloromethane, and the DSC could not be completely consumed.

### <Comparative Example 5>

A solution of OH-EG12-OH (monodisperse PEG with 12 ethylene glycol units, Mw 547, 200 mg, 366 µmol), DSC (281 mg, 1.1 mmol) and pyridine (132 µL) in dichloromethane (1.3 g) was stirred at room temperature under nitrogen for 2 hours. It was confirmed by NMR that the obtained SC-EG12-SC has an SC conversion rate of 100%, since an integral value of methylene at the α-position of the SC groups was 4.00 when a total integral value of methylene in EG12 excluding the methylene at the α- and β-positions of the SC groups was set to 44 (step (a)).

The insoluble DSC was removed by filtration, and SC-EG12-SC was obtained by condensing, but it was confirmed by NMR that 2.2 µmol of DSC remained as an impurity.

In Comparative Example 5, the same reaction as in Example 2 was performed to obtain an active carbonic acid ester of PEG, SC-EG12-SC, but in Comparative Example 5, DSC was removed only by filtration, and as a result, DSC remained as an impurity. Since DSC is almost insoluble in dichloromethane, most of the DSC could be removed by filtration, but since DSC is soluble in SC-EG12-SC, some DSC remained in the filtrate after filtration. The smaller the molecular weight of PEG, the greater the amount of DSC dissolved in PEG, and the greater the amount of remaining DSC.

The results of Examples 1 to 5 are shown in Table 1, and the results of Comparative Examples 1 to 5 are shown in Table 2.

From these results, in Examples 1 to 5, it was possible to produce an active carbonic acid ester of polyethylene glycol with an impurity content of 1 mol% or less in both polydisperse PEG and monodisperse PEG, since appropriate solvents and quenching agents could be selected. On the other hand, in Comparative Examples 1 to 5, the impurity content could not be reduced to 1 mol% or less since the selected solvent and quenching agent were not appropriate.

**[Table 1]**

| | Example 1 | Example 2 | Example 3 | Example 4 | Example 5 |
|---|---|---|---|---|---|
| PEG (polyethylene glycol having hydroxyl group) | MA-PEG2k-OH (polydisperse PEG) | OH-EG12-OH (monodisperse PEG) | mPEG2k-OH (polydisperse PEG) | Compound (1) (monodisperse PEG) | Compound (2) (monodisperse PEG) |
| Active carbonic acid reagent | DSC | DSC | p-NP-Cl | DSC | p-NP-Cl |
| Quenching agent (alcohol containing acidic functional group) | Citric acid | Citric acid | Salicylic acid | Citric acid | Citric acid |
| Aprotic solvent immiscible with water | Dichloromethane | Dichloromethane | Toluene | Dichloromethane | Dichloromethane |
| Washing with water | Yes | Yes | Yes | Yes | Yes |
| Remaining impurity | Not detected | Not detected | Not detected | Not detected | Not detected |

**[Table 2]**

| | Comparative Example 1 | Comparative Example 2 | Comparative Example 3 | Comparative Example 4 | Comparative Example 5 |
|---|---|---|---|---|---|
| PEG (polyethylene glycol having hydroxyl group) | MA-PEG2k-OH (polydisperse PEG) | MA-PEG2k-OH (polydisperse PEG) | mPEG1.5k-OH (polydisperse PEG) | mPEG1.5k-OH (polydisperse PEG) | OH-EG12-OH (monodisperse PEG) |
| Active carbonic acid reagent | DSC | DSC | DSC | DSC | DSC |
| Quenching agent | Water | Water | Bicine | HEPES | None |
| Aprotic solvent | Dichloromethane | Acetonitrile | Dichloromethane | Dichloromethane | Dichloromethane |
| Washing with water | Yes | No | Yes | Yes | No |
| Remaining impurity | Yes | Yes | Yes | Yes | Yes |

### INDUSTRIAL APPLICABILITY

The present invention makes it possible to easily "remove impurities such as a base and a decomposition product of an active carbonic acid reagent", which is difficult to achieve in the conventional art, by selecting effective solvents and reagents and simply washing with water. The active carbonic acid reagent that is difficult to remove by washing with water can be converted into impurities that can be easily removed by washing with water by making the active carbonic acid reagent react with an alcohol containing an acidic functional group, and thus can be washed with water simultaneously with other impurities. Even when the polyethylene glycol contains reactive functional groups such as maleimide groups or azido groups, decomposition of the functional groups and reaction with the functional groups are unlikely to occur, making it possible to prevent deterioration in quality. The present production method can be easily performed industrially, has excellent productivity, and can be performed in high yields without using adsorbents or ion exchange resins.

Although the present invention has been described in detail and with reference to specific embodiments, it will be apparent to those skilled in the art that various changes and modifications can be made without departing from the spirit and scope of the present invention.

The present application is based on a Japanese patent application (Japanese Patent Application No. 2022-35981) filed on March 9, 2022, the contents of which are incorporated herein by reference.

## Claims

1. A method for producing an active carbonic acid ester of polyethylene glycol, the method comprising:
a step (a) of reacting polyethylene glycol having a hydroxyl group with one or more active carbonic acid reagents selected from the group consisting of disuccinimidyl carbonate and p-nitrophenylchloroformate in presence of a base in an aprotic solvent which is immiscible with water, to obtain a composition containing an active carbonic acid ester of polyethylene glycol and the active carbonic acid reagent being unreacted;
a step (b) of partially removing the active carbonic acid reagent by filtering the composition obtained in the step (a), and then obtaining a composition by adding an alcohol containing an acidic functional group to react with the unreacted active carbonic acid reagent; and
a step (c) of removing a reaction product of the alcohol containing an acidic functional group and the active carbonic acid reagent, the alcohol containing an acidic functional group, and a decomposition product of the active carbonic acid reagent by washing the composition obtained in the step (b) with water.

2. The method for producing an active carbonic acid ester of polyethylene glycol according to claim 1, wherein
the active carbonic acid ester is expressed by the following Formula (1).
PEG-O-(C=O)-O-R ··· Formula (1)
(In the Formula (1),
PEG is a polyethylene glycol moiety having a linear or branched structure, and
R is a succinimidyl group or a p-nitrophenyl group.)

3. The method for producing an active carbonic acid ester of polyethylene glycol according to claim 1 or 2, wherein
the polyethylene glycol is polydisperse polyethylene glycol or monodisperse polyethylene glycol.

4. The method for producing an active carbonic acid ester of polyethylene glycol according to any one of claims 1 to 3, wherein
the polyethylene glycol has a molecular weight of 100 Dalton to 100,000 Dalton.

5. The method for producing an active carbonic acid ester of polyethylene glycol according to any one of claims 1 to 4, wherein
the polyethylene glycol has a plurality of hydroxyl groups.

6. The method for producing an active carbonic acid ester of polyethylene glycol according to any one of claims 1 to 5, wherein
the polyethylene glycol has one or more functional groups selected from the group consisting of a maleimide group, an azido group, a biotin group, a methoxy group, an aldehyde group protected with an acetal, an amino group protected with a 9-fluorenylmethyloxycarbonyl group, an amino group protected with a t-butoxycarbonyl group, and an amino group protected with a benzyloxycarbonyl group.

7. The method for producing an active carbonic acid ester of polyethylene glycol according to any one of claims 1 to 6, wherein
a solvent constituting the aprotic solvent which is immiscible with water is one or more solvents selected from the group consisting of toluene, chloroform, and dichloromethane.

8. The method for producing an active carbonic acid ester of polyethylene glycol according to any one of claims 1 to 7, wherein
the alcohol containing an acidic functional group is selected from the group consisting of glycolic acid, lactic acid, 3-hydroxybutyric acid, hydroxypivalic acid, β-hydroxyisovaleric acid, 3-hydroxy-3-methylvaleric acid, tartaric acid, malic acid, citric acid and hydroxybenzoic acid.

9. The method for producing an active carbonic acid ester of polyethylene glycol according to any one of claims 1 to 8, wherein
the washing with water is performed with water or aqueous solution, the water or aqueous solution having a pH of 0 or more and 7 or less.

10. An active carbonic acid ester of polyethylene glycol, which is made from a reaction product of polyethylene glycol having a hydroxyl group with one or more active carbonic acid reagents selected from the group consisting of disuccinimidyl carbonate and p-nitrophenylchloroformate, wherein
contents of the active carbonic acid reagent, a decomposition product of the active carbonic acid reagent, an alcohol containing an acidic functional group, and a reaction product of the alcohol containing an acidic functional group and the active carbonic acid reagent are each 1 mol% or less with respect to 100 mol% of the active carbonic acid ester.

11. The active carbonic acid ester of polyethylene glycol according to claim 10, wherein the active carbonic acid ester is expressed by the following Formula (2).
PEG-O-(C=O)-O-R ··· Formula (2)
(In the Formula (2),
PEG is a polyethylene glycol moiety having a linear or branched structure, and
R is a succinimidyl group or a p-nitrophenyl group.)
